# FASCICULE DE BREVET EUROPEEN

(11) **EP 2 558 820 B1**
(45) Date de publication et mention de la délivrance du brevet: **24.12.2014**
(21) Numéro de dépôt: 11723495.5
(22) Date de dépôt: 18.04.2011
(51) Int. Cl.: G01C 19/56, G01C 19/00

(54) **MESURE GYROSCOPIQUE PAR UN GYROSCOPE VIBRANT EN PRECESSION**
KREISELGESTÜTZTE MESSUNG DURCH EINEN IN PRÄZESSION VIBRIERENDEN KREISEL
GYROSCOPIC MEASUREMENT BY A GYROSCOPE VIBRATING IN PRECESSION

(30) Priorité: 16.04.2010 FR 1001627
(43) Date de publication de la demande: 20.02.2013
(73) Titulaire: SAGEM DEFENSE SECURITE, 92100 Boulogne-Billancourt (FR)
(72) Inventeur: LIGNON, Christian, F-75015 Paris (FR)
(74) Mandataire: Cabinet Plasseraud
(86) Numéro de dépôt international: PCT/FR2011/050891
(87) Numéro de publication internationale: WO 2011/128606

(56) Documents cités:
- EP-A1- 1 491 856
- EP-A2- 1 571 417
- FR-A1- 2 904 870

## Description

La présente invention est relative aux gyroscopes vibrants dont le principe repose sur l'effet de Coriolis et elle est plus particulièrement relative à la précision des mesures fournies par ce type de gyroscope.

De tels gyroscopes vibrants sont classiquement utilisés dans des systèmes inertiels destinés à la navigation, comme cela est le cas par exemple pour un compas gyroscopique qui est adapté pour fournir une mesure d'angle par rapport à une direction de référence qui est celle du Nord géographique (Cap).

Les gyroscopes de type Coriolis Vibratory Gyroscopes (CVG) axisymétriques, par exemple de type Hemispherical Resonance Gyroscopes (HRG ou GRH) ou plus généralement dits de type I, tels que ceux décrits dans le document 'Type I and Type II micromachined vibratory gyroscopes' de Andrei M. Shkel, pages 586-593, IEEE/ION (pour'Institute of Electrical and Electronics Engineer/ Institute Of Navigation' PLANS 2006, San Diego, CA, USA), fonctionnent en boucle ouverte et permettent de mesurer un angle de rotation absolu sur la base d'une mesure d'un angle représentant la position géométrique de vibration du gyroscope par rapport à des électrodes de mesure.

Un tel gyroscope peut aussi être utilisé en boucle fermée par le contrôle de la position géométrique de vibration via une commande de précession comme cela est décrit notamment dans les documents FR 2 755 227 et FR2904870.

Dans ce cas, la position géométrique de vibration du gyroscope est maintenue dans une position fixe, et la mesure est déduite à partir de la commande qu'il est nécessaire d'appliquer au gyroscope pour le maintenir dans cette position géométrique de vibration fixe. Ce type de fonctionnement est également appelé 'bouclage en gyromètre'. Les valeurs fournies par la mesure physique ne correspondent plus alors à un angle mais à une vitesse de rotation.

Qu'ils soient utilisés en boucle ouverte ou en boucle fermée, les mesures fournies par ces gyroscopes vibrants peuvent être entachées d'erreurs qui sont essentiellement fonction de la position de la vibration par rapport aux électrodes de mesure. Ces erreurs sont donc variables en fonction de la position géométrique de vibration, et ont pour effet de dégrader le niveau de précision des valeurs ainsi mesurées. Il est donc utile de chercher à réduire ces erreurs afin d'améliorer les performances de ce type de gyroscope.

La présente invention vient améliorer la situation.

Un premier aspect de la présente invention propose un procédé de mesures gyroscopiques sous la forme d'un signal de sortie fourni par un système gyroscopique comprenant un gyroscope vibrant ;
ledit gyroscope vibrant dans une première position géométrique de vibration initiale et fournissant un signal de mesure originaire ;
dans lequel on applique au gyroscope vibrant un signal de commande périodique sur une période de temps, adapté :
- pour faire tourner la position géométrique de vibration dans un premier sens, pendant une partie de la période de temps, provocant un changement, selon un premier profil de vitesse, de la position de la vibration dudit gyroscope depuis la première position géométrique de vibration jusqu'à une seconde position géométrique de vibration ; et
- pour faire tourner la position géométrique de vibration dans un second sens opposé au premier sens, pendant l'autre partie de la période de temps, provocant un changement selon un second profil de vitesse, de la position de la vibration dudit gyroscope depuis la seconde position géométrique de vibration jusqu'à une troisième position géométrique de vibration ;
   les premier et second profils de vitesse générant une variation de vitesse du changement de position géométrique de vibration en fonction du temps ;
   ledit signal de commande ayant une moyenne nulle sur ladite période de temps ;
   ledit signal de sortie étant basé sur un signal corrigé issu du signal de mesure originaire ;
   dans lequel le signal corrigé est fondé sur une identification d'erreurs effectuées, pendant les portions de signal à haute fréquence, par comparaison entre, d'une part, le signal de mesure originaire auquel a été retranché le signal de commande et, d'autre part, le signal corrigé.

Dans un mode de réalisation de la présente invention, un système gyroscopique comprend un gyroscope vibrant qui fournit un signal de mesure représentant une variation de sa position géométrique de vibration en fonction du temps.

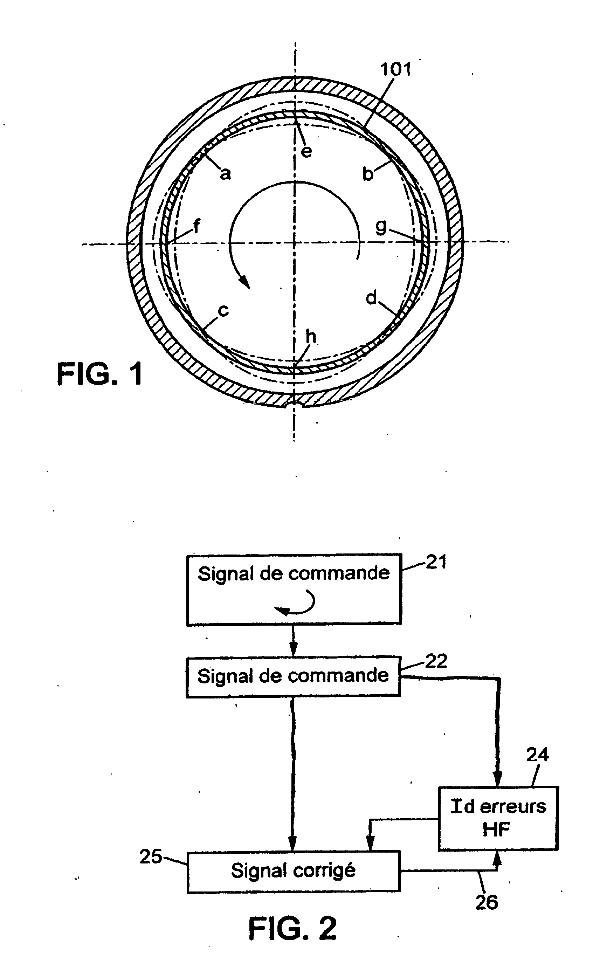

On entend par les termes 'position géométrique de vibration' d'un gyroscope, la position de l'onde stationnaire. La figure 1 illustre une telle onde stationnaire.

L'onde illustrée ici a quatre noeuds a, b, c, d et quatre ventres e, f, g, h autour de la périphérie d'un résonateur hémisphérique 101. Ces quatre ventres et quatre noeuds sont alternés et uniformément espacés de quarante-cinq degrés. Les noeuds sont des points sur l'onde stationnaire où le déplacement est minimal, et les ventres sont des points sur l'onde stationnaire où le déplacement est maximal. Le fonctionnement du gyroscope à résonateur hémisphérique exige un suivi précis du mouvement de l'onde stationnaire, qui exige à son tour que l'emplacement des noeuds et des ventres soit déterminé avec exactitude.

On peut faire tourner la position de cette onde stationnaire, ou encore la position géométrique de vibration du gyroscope de sorte que les noeuds et les ventres illustrés ne soient pas situés comme cela est illustré, mais en décalage.

Avantageusement, ce gyroscope vibrant est soumis à un signal de commande périodique, sur une période de temps, qui est adapté pour faire tourner la position géométrique de vibration du gyroscope, dans un premier sens, pendant une partie de la période de temps, et selon un premier profil de vitesse, puis dans un sens opposé selon un second profil de vitesse. Ainsi, le signal de mesure fourni par le gyroscope vibrant est basé sur des mesures faites dans des positions géométriques de vibrations différentes, de telle sorte que les erreurs de mesure qui sont liées aux positions géométriques de vibration du gyroscope vibrant peuvent être annulées ou encore moyennées. En outre, il convient de retrancher de ce signal de mesure fourni par le gyroscope vibrant le signal de commande périodique qui lui a été appliqué pour obtenir in fine des mesures gyroscopiques corrigées.

Le signal de commande périodique peut correspondre, sur une période de temps, à un changement de la position géométrique de vibration dans un premier sens de la première à la seconde position géométrique de vibration, ce changement de position géométrique de vibration étant effectué selon le premier profil de vitesse, puis à un changement de la position géométrique de vibration dans un second sens de la seconde à une troisième position géométrique de vibration, ce changement de position étant effectué selon le second profil de vitesse. Chacun de ces profils de vitesse indique une variation en fonction du temps de la vitesse de rotation qui est appliquée à la position géométrique de vibration via le signal de commande selon un mode de réalisation de la présente invention.

On peut prévoir que, dans le cas où le gyroscope vibrant considéré ne subit que le signal de commande, la troisième position de vibration corresponde sensiblement à la première position de vibration. Toutefois, cela pourrait ne pas être le cas lorsque le gyroscope vibrant subit en outre une rotation physique liée à un mouvement réel du porteur sur lequel il est fixé par exemple.

En procédant ainsi, le signal de mesure originaire fourni par le gyroscope vibrant auquel est appliqué ce signal de commande est basé sur des mesures faites dans des positions géométriques de vibrations différentes, de telle sorte que les erreurs de mesure qui sont liées aux positions géométriques de vibration du gyroscope vibrant peuvent être avantageusement annulées ou tout au moins moyennées, le signal de commande étant à moyenne nulle.

Il est en outre prévu ici de réduire certaines erreurs résiduelles pouvant encore affecter les mesures fournies par le gyroscope vibrant et ainsi obtenir un signal corrigé permettant de fournir des mesures gyroscopiques sous la forme d'un signal de sortie fiable. A cet effet, on procède avantageusement à une identification des erreurs sur la base d'une comparaison entre, d'une part, le signal de commande et, d'autre part, le signal corrigé de l'itération précédente qui est reçu par voie de retour. Ainsi, le signal corrigé est issu du signal de mesure originaire auquel est soustrait le signal de commande (la précession basée sur le signal de commande permettant de moyenner des erreurs), corrigé en outre des erreurs résiduelles qui peuvent avantageusement être identifiées par comparaison avec le signal corrigé in fine (par exemple par des mesures d'autres gyroscopes du système gyroscopique et/ou une entité de mesure externe).

On peut en effet prévoir que le système gyroscopique comprend en outre une entité de mesure externe et que l'identification d'erreurs prenne en compte des mesures fournies par cette entité de mesure externe.

Dans un mode de réalisation de la présente invention, le signal de commande présente des portions de signal à haute fréquence relativement au signal de sortie, et l'identification d'erreurs est effectuée pendant les portions de signal de commande à haute fréquence.

Avantageusement, en procédant ainsi, les portions de signal du signal de commande qui sont à haute fréquence par rapport au signal de sortie (c'est-à-dire par rapport au mouvement du porteur du système gyroscopique) permettent de distinguer au sein des mesures faites par le gyroscope vibrant, la partie qui est relative au signal de commande de la partie qui est relative au mouvement effectif à mesurer. Plus précisément, il est prévu de comparer un signal de mesure du gyroscope vibrant (ou plus précisément le signal de mesure originaire moins le signal de commande appliqué) avec le signal corrigé injecté par voie de retour, dans les périodes de temps pendant lesquelles le signal de commande est relativement à haute fréquence par rapport au signal de sortie.

En effet, avantageusement, pendant les périodes de temps durant lesquelles le signal de commande est à haute fréquence par rapport au signal de sortie, il est aisé de dissocier, ou encore décoreller, les mouvements effectifs du porteur du système gyroscopique du signal de commande au sein du signal de mesure originaire. Il est alors possible de distinguer les erreurs liées au gyroscope vibrant des mouvements effectifs qui sont mesurés par ce gyroscope vibrant. En effet, dans ces conditions, le gyroscope vibrant est excité par un signal de commande à une fréquence plus élevée que la fréquence des mouvements effectifs à mesurer, ce qui permet de faire une distinction entre les erreurs à attribuer aux mesures faites et le mouvement réel à mesurer.

Les portions de signal à haute fréquence, dans le signal de commande, peuvent correspondre à des inversions de sens du signal de commande.

En effet, en procédant ainsi, il est possible d'obtenir des périodes de temps aux environs des moments d'inversion du signal de commande pendant lesquelles le signal de commande est de haute fréquence par rapport au mouvement du porteur sur lequel est fixé le système gyroscopique. Tel est le cas notamment, lorsque le porteur est par exemple un bateau et lorsque les inversions de sens du signal de commande sont brutales.

Dans un mode de réalisation de la présente invention, le système gyroscopique comprend en outre une entité de mesure externe, et l'identification d'erreurs prend en compte des mesures fournies par l'entité de mesure externe pendant les portions de signal du signal de commande qui ne sont pas à haute fréquence relativement au signal de sortie.

Grâce à de telles caractéristiques, il est possible d'identifier des erreurs liées au gyroscope vibrant par rapport aux mesures fournies par l'entité de mesure externe pour augmenter la fiabilité du signal de sortie même dans le cas où le signal de commande ne présente pas de période de haute fréquence par rapport au signal de sortie fourni par le système gyroscopique.

Ce mode de réalisation peut notamment être très avantageux dans le cas où le porteur du système gyroscopique est un avion dont le mouvement peut présenter des revirements de direction brusques qui pourraient éventuellement se produire dans des périodes de haute fréquence du signal de commande.

Cette entité de mesure externe peut être un gyroscope supplémentaire. Dans un mode de réalisation de la présente invention, ce gyroscope supplémentaire est un second gyroscope vibrant du système, et un signal de commande supplémentaire lui est appliqué. Ce signal de commande supplémentaire présente des portions de signal à haute fréquence relativement au signal de sortie qui sont décalées dans le temps par rapport aux portions de signal à haute fréquence du signal de commande appliqué au premier gyroscope vibrant.

Ici, on prévoit des premier et second gyroscopes vibrants, soumis respectivement à des signaux de commande qui ne présentent pas des portions de signal à haute fréquence aux mêmes périodes. Les portions de signal à haute fréquence ne sont pas simultanées puisqu'elles sont décalées dans le temps les unes par rapport aux autres. Grâce à ce décalage temporel entre les portions de signal hautes fréquences respectives des deux signaux de commande, on peut continuer à distinguer au moins un des deux signaux de commande du mouvement du porteur même si, à certains moments, l'autre signal de commande peut être de fréquence proche de celle du mouvement du porteur.

Dans un mode de réalisation de la présente invention, le système gyroscopique comprend, outre le premier gyroscope vibrant, des deuxième et troisième gyroscopes vibrants fournissant chacun un signal de mesure originaire. On applique en outre à chacun des deuxième et troisième gyroscopes vibrants des signaux de commande périodiques respectifs sur une période de temps, adapté :
- pour faire tourner la position géométrique de vibration dans un premier sens, pendant une partie de la période de temps, provocant un changement, selon un premier profil de vitesse, de la position de la vibration depuis une première position géométrique de vibration jusqu'à une seconde position géométrique de vibration ; et
- pour faire tourner la position géométrique de vibration dans un second sens opposé au premier sens, pendant l'autre partie de la période de temps, provocant un changement selon un second profil de vitesse, de la position de la vibration depuis la seconde position géométrique de vibration jusqu'à une troisième position géométrique de vibration ;
lesdits signaux de commande ayant une moyenne nulle sur ladite période de temps et présentant des portions de signal à haute fréquence relativement au signal de sortie qui sont décalées entre elles dans le temps ;
ledit signal de sortie étant basé sur des signaux corrigés respectivement issus des signaux de mesure intermédiaires ;
dans lequel chacun des signaux corrigés est fondé sur une identification d'erreurs effectuées, pendant les portions de signal à haute fréquence du signal de commande correspondant, par comparaison entre, d'une part, le signal de mesure originaire correspondant auquel a été retranché le signal de commande correspondant et, d'autre part, le signal corrigé correspondant.

Dans ces conditions, il est avantageusement possible d'obtenir une centrale de navigation fiable tout en étant à un coût relativement bas car basée sur trois gyroscopes vibrants.

Il convient de noter que les signaux de commande appliqués aux trois gyroscopes vibrants peuvent être similaires ou encore différents.

Dans un mode de réalisation de la présente invention, il est prévu que chacun desdits signaux corrigés, respectivement pour chacun des gyroscopes vibrants, est obtenu en outre par prise en compte d'erreurs identifiées sur la base d'une comparaison entre, d'une part, le signal de sortie fourni par le système gyroscopique en fonction de la position de vibration et, d'autre part, des mesures de référence.

Dans ces conditions, on identifie des erreurs en prenant en compte des mesures fournies par le système gyroscopique en sortie, en fonction de la position de vibration et du signal de commande. Ici, avantageusement, il est prévu de mettre en oeuvre une boucle de retour des mesures fournies en sortie par le système gyroscopique afin de les observer en fonction des variations de la position de vibration des gyroscopes vibrants du système et des variations du signal de commande. Grâce à cette voie de retour, chacun des signaux corrigés fourni par un des gyroscopes vibrants peut avantageusement être corrigé en outre sur la base des erreurs ainsi identifiées.

Cette boucle de retour permet de mettre en place une période d'observation et d'identification des erreurs des signaux de mesure fournies par chacun des gyroscopes vibrants du système en comparaison avec des mesures de référence.

Dans un mode de réalisation de la présente invention, les mesures de référence sont fournies par un signal de mesure externe.

Ainsi, on peut procéder à l'identification des erreurs sur la base d'une comparaison entre les mesures fournies par le système et les mesures de référence fournies par un système de mesure externe qui est alors utilisé en tant que référence pour comparaison. Ce signal de mesure peut être un GPS par exemple (pour'Global Positioning System' en anglais).

Dans un mode de réalisation, l'identification d'erreurs est déterminée, pour chacun des gyroscopes vibrants, sur la base d'un filtre de Kalman prenant en paramètres la position de vibration du gyroscope vibrant, le signal de commande, les mesures fournies par le système gyroscopique et les mesures de référence.

On peut également prévoir de mettre en oeuvre une méthode des moindres carrés afin d'identifier les erreurs selon un mode de réalisation de la présente invention.

Le système gyroscopique peut comprendre trois gyroscopes vibrants positionnés selon un trièdre, ce trièdre ayant une trisectrice orientée selon un axe sensiblement vertical.

On entend par les termes 'sensiblement vertical', le fait que la trisectrice ait une orientation qui soit essentiellement dirigée dans le sens de la verticale de telle sorte que les projections dans le plan horizontal des composantes de vitesse des mesures des gyroscopes fournissent une information pertinente et exploitable.

Dans ces conditions, avantageusement, les erreurs introduites dans les mesures fournies par les gyroscopes vibrants du système gyroscopique peuvent être identifiées de manière équivalente pour les trois gyroscopes vibrants du système gyroscopique. Plus précisément, en navigation, les composantes horizontales de vitesse sont celles qui sont les plus utiles à exploiter. En disposant le système gyroscopique comme indiqué ci-avant, il est avantageusement possible d'obtenir des composantes horizontales pour les trois gyroscopes vibrants de manière équivalente, par projection dans le plan horizontal des mesures fournies par chacun d'eux. Ainsi, l'identification des erreurs entachant les mesures fournies par chaque gyroscope vibrant peut être effectuée de manière pertinente en prenant en compte chacun des gyroscopes vibrants du système.

Dans un mode de réalisation de la présente invention, les premier et second profils de vitesse sont différents pour chacun des gyroscopes vibrants du système gyroscopique, les différences permettant que les erreurs associées aux mesures des trois gyroscopes soient décorrélées les unes des autres.

En prévoyant ainsi d'appliquer des signaux de commande différents respectivement aux différents gyroscopes vibrants, on peut avantageusement décorréler les erreurs qui entachent leurs signaux de mesure respectifs. Afin d'introduire des différences entre les signaux de commande permettant une telle décorellation des erreurs respectives des trois gyroscopes vibrants, on peut prévoir de moduler la période du signal de commande, ou encore période des cycles de précession, ou bien de déphaser les périodes des signaux de commande entre eux, c'est-à-dire déphaser les cycles de précession des trois gyroscopes vibrants entre eux.

Dans un mode de réalisation de la présente invention, le second profil de vitesse correspond à l'inverse du premier profil de vitesse en fonction du temps. Ainsi, le signal de commande appliqué est symétrique de part et d'autre du milieu de sa période de temps.

Dans un mode de réalisation, on peut prévoir que les première et seconde parties de période de temps sont identiques.

Dans un mode de réalisation, le signal de mesure du gyroscope et le signal de commande sont exprimés comme les mesures fournies par le système gyroscopique, soit en valeurs d'angle, soit en valeurs de vitesse angulaire. Dans ce cas, avantageusement, il n'est pas nécessaire d'effectuer une intégration de signal avant de procéder à la soustraction du signal de commande au signal de mesure.

Dans un mode de réalisation de la présente invention, les mesures fournies par le système gyroscopique correspondent à des valeurs de vitesse angulaire, chaque valeur de vitesse angulaire résultant de la division d'une différence entre deux valeurs de positions géométriques de vibration du signal corrigé, séparées par un nombre entier de périodes de temps, par une valeur de temps correspondant au nombre entier de périodes de temps.

Un deuxième aspect de la présente invention propose un système gyroscopique comprenant :
- un gyroscope vibrant, ledit gyroscope vibrant dans une première position géométrique de vibration initiale et fournissant un signal de mesure originaire ;
- une unité de commande adaptée pour appliquer un signal de commande périodique, sur une période de temps, adapté :
   o pour faire tourner la position géométrique de vibration dans un premier sens, pendant une partie de la période de temps, provocant un changement, selon un premier profil de vitesse, de la position de la vibration dudit gyroscope depuis la première position géométrique de vibration jusqu'à une seconde position géométrique de vibration ; et
   o pour faire tourner la position géométrique de vibration dans un second sens opposé au premier sens, pendant l'autre partie de la période de temps, provocant un changement, selon un second profil de vitesse, de la position de la vibration dudit gyroscope depuis la seconde position géométrique de vibration jusqu'à une troisième position géométrique de vibration,
- une unité de traitement adaptée pour fournir un signal de sortie sur la base d'un signal corrigé représentant une variation de valeurs de position géométrique de vibration et obtenu en retranchant le signal de commande au signal de mesure originaire fourni par le gyroscope vibrant ;
les premier et second profils de vitesse indiquant une variation de vitesse du changement de position géométrique de vibration en fonction du temps ;
ledit signal de commande ayant une moyenne nulle sur ladite période de temps :
ledit signal de sortie étant basé sur un signal corrigé issu du signal de mesure originaire ;
dans lequel le signal corrigé est fondé sur une identification d'erreurs effectuées par comparaison entre, d'une part, le signal de mesure originaire auquel a été retranché le signal de commande et, d'autre part, le signal corrigé.

Dans un mode de réalisation de la présente invention, le signal de commande présente des portions de signal à haute fréquence relativement au signal de sortie ; et
l'identification d'erreurs est effectuée pendant les portions de signal à haute fréquence.

Le système gyroscopique peut en outre comprendre une entité de mesure externe, et
des mesures fournies par l'entité de mesure externe sont prises en compte pendant les portions de signal du signal de commande qui ne sont pas à haute fréquence relativement au signal de sortie.

Le gyroscope supplémentaire étant vibrant, un signal de commande supplémentaire peut être appliqué au gyroscope supplémentaire, ledit signal de commande supplémentaire présentant des portions de signal à haute fréquence relativement au signal de sortie, qui sont décalés dans le temps par rapport aux portions de signal à haute fréquence du signal de commande appliqué au gyroscope vibrant du système.

Le système gyroscopique peut comprendre, outre le premier gyroscope vibrant, des deuxième et troisième gyroscopes vibrants fournissant chacun un signal de mesure originaire. On peut alors prévoir d'appliquer en outre à chacun des deuxième et troisième gyroscopes vibrants, via l'unité de commande, des signaux de commande périodiques respectifs sur une période de temps, adapté :
- pour faire tourner la position géométrique de vibration dans un premier sens, pendant une partie de la période de temps, provocant un changement, selon un premier profil de vitesse, de la position de la vibration depuis une première position géométrique de vibration jusqu'à une seconde position géométrique de vibration ; et
- pour faire tourner la position géométrique de vibration dans un second sens opposé au premier sens, pendant l'autre partie de la période de temps, provocant un changement selon un second profil de vitesse, de la position de la vibration depuis la seconde position géométrique de vibration jusqu'à une troisième position géométrique de vibration ;
   lesdits signaux de commande ayant une moyenne nulle sur ladite période de temps et présentant des portions de signal à haute fréquence relativement au signal de sortie qui sont décalées entre elles dans le temps ;
   ledit signal de sortie étant basé sur des signaux corrigés respectivement issus des signaux de mesure intermédiaires ;
   dans lequel chacun des signaux corrigés est fondé sur une identification d'erreurs effectuées, pendant les portions de signal à haute fréquence du signal de commande correspondant, par comparaison entre, d'une part, le signal de mesure originaire correspondant auquel a été retranché le signal de commande correspondant et, d'autre part, le signal corrigé correspondant.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une position géométrique de vibration d'un gyroscope vibrant ;
- la figure 2 illustre les principales étapes d'un procédé de mesure par un système gyroscopique selon un mode de réalisation de la présente invention ;
- la figure 3 illustre une erreur résiduelle corrigée par une boucle de retour selon un mode de réalisation de la présente invention ;
- les figures 4-A et 4-B illustrent une architecture d'un système gyroscopique selon un mode de réalisation de la présente invention ;
- la figure 5 illustre une configuration d'un système gyroscopique selon un mode de réalisation de la présente invention ;
- la figure 6 illustre une application de signaux de commande déphasés selon un mode de réalisation de la présente invention,
- la figure 7 illustre une application de signaux de commande modulés selon un mode de réalisation de la présente invention ;
- la figure 8 illustre des premier et second profils de vitesse en fonction du temps selon un mode de réalisation de la présente invention ;

La figure 2 illustre les principales étapes d'un procédé de mesure selon un mode de réalisation de la présente invention.

A une étape 21, on applique un signal de commande périodique adapté pour faire tourner la position géométrique de vibration dans un premier sens, pendant une partie de la période du signal de commande périodique. Sous ce signal de commande, la position géométrique de vibration du gyroscope vibrant tourne à une vitesse, qui peut varier en fonction du temps selon un premier profil déterminé, dans un premier sens. Ainsi, le gyroscope vibrant passe d'une première position géométrique de vibration à une seconde position géométrique de vibration. Ce premier profil de vitesse peut également correspondre à une vitesse constante, auquel cas, la position géométrique de vibration varie alors de manière continue sur la partie de période de temps considérée.

Puis, à une étape 22, on applique un signal de commande adapté pour faire tourner la position géométrique de vibration dans un second sens opposé au premier sens, pendant l'autre période de temps du signal de commande. Le signal de commande provoque ici un changement de la position de la vibration du gyroscope depuis la seconde position géométrique de vibration jusqu'à une troisième position géométrique de vibration (qui peut correspondre à la première position), ce changement étant effectué selon une vitesse qui peut être variable en fonction du temps selon un second profil de vitesse. Le signal de commande a une moyenne de valeur nulle sur la période du signal de commande périodique.

Dans un mode de réalisation, le second profil de vitesse correspond au premier profil de vitesse inversé en fonction du temps. Ainsi, les premier et second profils de vitesse sont symétriques l'un par rapport à l'autre par rapport au centre de la période de temps.

Le gyroscope vibrant peut donc se trouver ensuite dans la position géométrique de vibration initiale, c'est-à-dire la première position géométrique de vibration après l'étape 22, lorsque le gyroscope vibrant subit seulement le signal de commande selon un mode de réalisation de la présente invention.

Il convient de noter que dans un mode de réalisation de la présente invention, les premier et second profils de vitesse indiquent une vitesse constante en fonction du temps, avec une variation nulle de ce fait, c'est-à-dire que la position de la vibration tourne à vitesse constante à la fois dans le premier sens et dans le second sens.

Ce signal de commande est donc un signal de précession périodique adapté pour appliquer une précession alternée au gyroscope vibrant.

Puis, on répète les étapes 21 et 22 de sorte à disposer de mesures du gyroscope vibrant sur une certaine période de temps, alors que ce dernier est en cours de précession.

A une étape 23, on retranche le signal de commande du signal de mesure originaire. On peut alors obtenir un signal corrigé 25 fondé sur une moyenne des erreurs en fonction de la précession appliquée, par exemple de la manière décrite dans FR2925669 (MESURE PAR SYSTEME GYROSCOPIQUE).

Selon un mode de réalisation possible, le procédé applique une précession rapide, c'est-à-dire un signal de commande de fréquence haute au regard de la fréquence du signal de sortie. Ceci revient à dire que le changement d'orientation du porteur (support du système gyroscopique) est lent par rapport à la fréquence de précession.

Cependant, si le porteur est très lent (voire immobile), une précession dite rapide (par rapport aux mouvements du porteur) peut sembler lente à un observateur humain.

Si un porteur est peu dynamique (bateau), le procédé peut par exemple utiliser des fréquences de l'ordre du Herz. Pour un avion à l'arrêt sur un aéroport, effectuant une initialisation de sa centrale inertielle (comprenant le système gyroscopique faisant l'objet du procédé), le temps d'alignement (phase d'initialisation) de la centrale inertielle peut être par exemple de 300 secondes. La fréquence de précession peut être alors, par exemple, de l'ordre du centième de Herz, c'est-à-dire que la période de précession peut se compter en minutes.

Dans de telles conditions, puisque le mouvement du porteur est lent à l'échelle d'une période de précession, on peut s'attendre à une mesure du gyroscope sensiblement constante (une fois le signal de commande déduit) à l'échelle d'une période de précession (il n'y a pas de mouvement ou du moins un mouvement négligeable à cette échelle), et ainsi tout écart mesuré par rapport à la constante peut être considéré comme devant être corrigé (cela peut être le cas notamment lors de l'alignement d'une centrale inertielle d'un avion).

Différents types de gyroscopes peuvent utiliser différentes plages de fréquences de précession.

Par exemple, pour un gyroscope de type GRH, on peut envisager, dans certains modes de réalisation, de monter jusqu'à des fréquences de précession de l'ordre de 0,1 Hz (environ). Pour un gyroscope de type MEMs, on pourrait envisager, dans certains modes de réalisation, d'utiliser des fréquences de précession de l'ordre de 10Hz (quelques dizaines de Herz par exemple).

Le procédé peut utiliser un signal de commande de fréquence d'un ordre de grandeur pouvant correspondre dans certains cas à celui d'une fréquence du signal de sortie. Ceci peut correspondre par exemple à un cas de changement d'orientation ponctuellement très rapide du porteur (en présence d'une précession pourtant rapide), ou d'un mouvement du porteur lent (navire en eau calme, avion à l'arrêt, etc.) mais d'une précession de fréquence lente elle aussi.

Ainsi, il est possible d'utiliser une fréquence de signal de commande induisant une rotation correspondant par exemple à l'équivalent d'un tour par seconde (360° par seconde), dans le cas où le signal de commande représente une valeur angulaire. Une telle fréquence est une fréquence de commande relativement élevée pour des dispositifs typiques susceptibles de mettre en oeuvre un procédé selon l'invention (tels que des satellites, des sous-marins, des navires, des avions, des sondes spatiales, des appareils de forage pétrolier, etc.). Cependant, de telles fréquences (correspondant à des mouvements brusques) peuvent ponctuellement être atteintes voire dépassées par le signal de sortie du gyroscope (par exemple à la suite d'un trou d'air très violent pour en avion, d'une vague de très grande amplitude pour un navire, etc.).

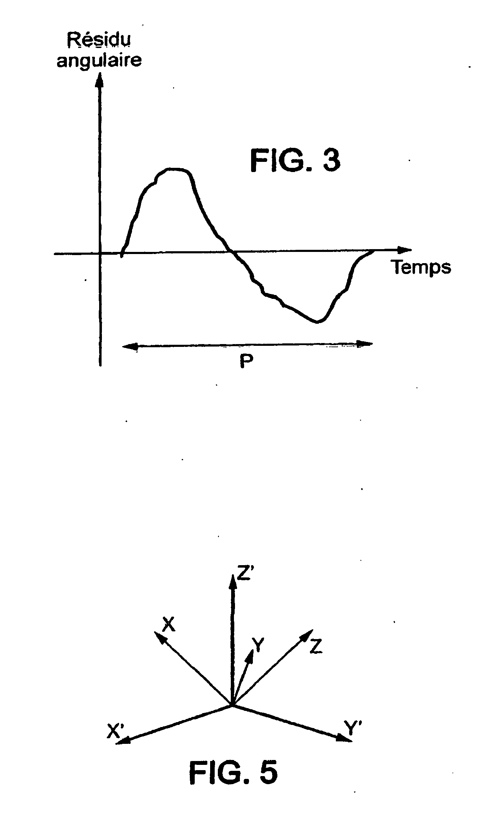

A une étape 24, il est prévu d'identifier des erreurs de ce signal de mesure originaire pendant les périodes de temps d'observabilité, c'est-à-dire les périodes pendant lesquelles le signal de commande présente une haute fréquence au regard de la fréquence du signal de sortie, ou encore par rapport au mouvement du porteur du système gyroscopique. On peut alors obtenir dans de telles conditions un signal corrigé à la fois grâce à la précession appliquée par le signal de commande qui a permis de moyenner les erreurs du gyroscope vibrant et également grâce à l'identification d'erreurs résiduelles qui ont pu être déterminées au moment où l'on peut distinguer le signal de commande dans le signal de mesure originaire. Ce type d'erreurs résiduelles est représenté à la figure 3.

Plus précisément, il est prévu d'identifier les erreurs résiduelles en comparant le signal corrigé selon un mode de réalisation (reçu en boucle de retour 26) avec le signal de commande pendant les périodes dites d'observabilité des erreurs.

Le procédé peut s'accommoder temporairement, lors d'une identification d'erreur, d'une fréquence de précession voisine voire inférieure à celle du mouvement du porteur, car l'identification d'erreur mise en oeuvre par le procédé peut être itérative. On peut alors tolérer de manière ponctuelle que le procédé fasse temporairement diverger une estimation d'erreur (ou du moins ne participe pas à la faire converger).

Lorsque l'on mesure un changement d'orientation presque aussi rapide voire plus rapide que la précession), une mise en oeuvre possible du procédé peut également ignorer les corrections issues de l'identification d'erreur, qui ne sont potentiellement plus pertinentes car le signal de sortie est susceptible d'avoir beaucoup varié pendant la période de précession. Une mise en oeuvre possible peut également consister à arrêter de faire des estimations et à ne corriger le signal mesuré que sur la base de l'erreur précédemment estimée.

Afin de détecter qu'une estimation d'erreur n'est plus fiable, par exemple en raison d'une fréquence de mouvement de porteur trop importante par rapport à la précession, le procédé peut effectuer, après plusieurs estimations successives de l'erreur, une mesure d'écart type de ces estimations, et si l'écart type se met à dépasser un certain seuil, le procédé peut supposer que les conditions ne sont pas réunies pour que l'estimation d'erreur soit fiable. Ceci peut être lié par exemple à un mouvement du porteur trop important qui nuit à l'estimation. Dans un tel cas, il peut ne plus y avoir de séparation du signal de commande et du signal reflétant le mouvement du porteur (on n'a alors plus deux domaines fréquentiels mais un seul, issu de deux domaines qui se recoupent), et une hypothèse de séparation fréquentielle qui peut être avantageuse pour la mise en oeuvre du procédé n'est alors plus respectée, les estimations d'erreurs étant alors très bruitées. Par exemple, dans certains modes de réalisation, on pourrait considérer qu'n écart type qui se met à dépasser trois fois l'écart type rencontré dans des conditions de séparation de fréquence normales et le signe que l'estimation d'erreur ne doit plus être considérée comme fiable.

Un gyroscope n'est pas nécessairement parfait et un signal de commande donné ne produit pas nécessairement de manière absolument exacte la rotation requise par le signal de commande. Ainsi, les erreurs résiduelles peuvent être dues par exemple à la différence entre la précession réellement effectuée et la précession théorique qui aurait du correspondre au signal de commande. Ces erreurs résiduelles peuvent s'ajouter à l'erreur entre la précession effectivement effectuée et la précession telle que mesurée, qui est éventuellement entachée d'erreurs de mesure. Dans ce cas la mesure du gyroscope ne donne donc accès qu'à la somme des erreurs, et l'on moyenne donc la somme des erreurs.

Il peut être pertinent de ne pas appliquer de précession en continu. Par exemple, durant certaines phases de fonctionnement, on n'a pas besoin de corriger l'estimation d'erreur pour assurer la stabilité, par exemple si la température reste sensiblement constante, et s'il n'y pas d'excitations extérieures majeures (par exemple de faibles vibrations, etc.), alors on peut dans certains modes de réalisation considérer que les erreurs vont rester stables (la précession pouvant alors s'avérer superflue). Si le procédé met néanmoins en oeuvre une précession, cette procession pourrait même s'avérer contre productive, en l'absence d'instabilités à corriger, alors que la présence d'une précession peut à elle seule induire des défauts (par exemple occasionner des instabilités) et causer des apparitions d'erreurs qui n'auraient sinon pas nécessairement été présentes et dont la correction aurait été inutile.

Selon un mode de réalisation possible, la correction d'erreurs résiduelles se fonde sur une mesure fournie par un élément extérieur (tel qu'un autre gyroscope, ou tout autre moyen de mesure angulaire, tel que moyen optique, laser, etc.).

Une source d'erreur importante peut être le facteur d'échelle entre la commande appliquée et la rotation effectivement induite. Par exemple la rotation peut n'être que de 98% (valeur purement illustrative) de la commande, et lors d'une soustraction du signal de commande opérée sur le signal mesuré, on constaterait un résidu de 2% du signal de commande.

Par signal de commande, on peut ici entendre un signal indiquant une variation de valeurs d'angle en fonction du temps. Dans ce cas, lorsque le signal de mesure du gyroscope correspond à des valeurs de vitesse angulaire, la soustraction entre les signaux peut être effectuée directement, et lorsque le signal de mesure correspond à des valeurs d'angles, alors il est prévu de déterminer l'intégrale du signal de commande afin d'obtenir le signal de commande sous la forme de valeurs d'angle et de pouvoir le soustraire au signal de mesure.

Il convient de noter que l'étape 23 peut être réalisée de manière continue pendant les étapes 21 et 22 sont successivement effectuées.

Les mesures fournies par le système gyroscopique peuvent alors être basées sur ce signal corrigé qui représente une variation de valeurs de position géométrique de vibration du gyroscope.

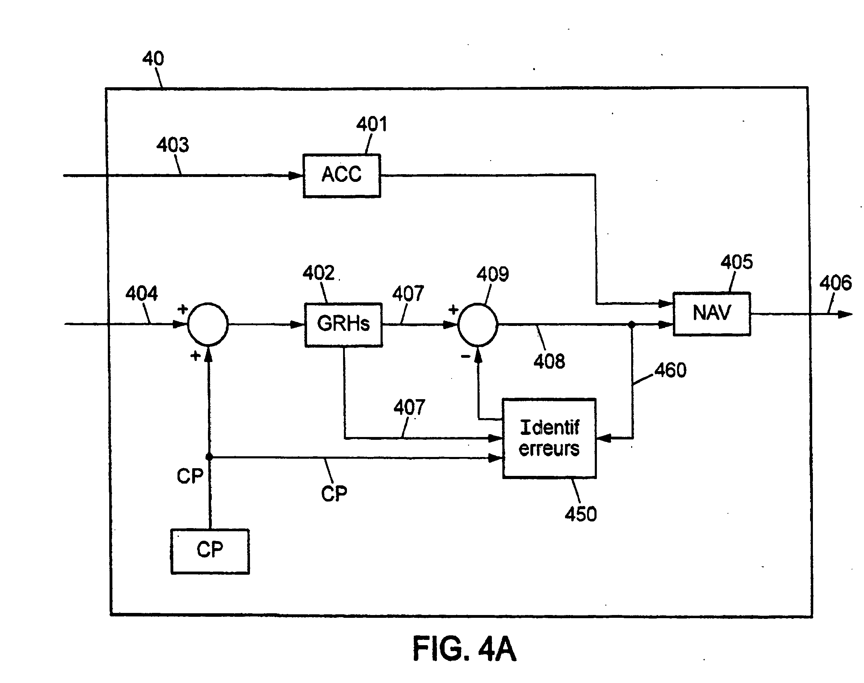

La figure 4-A illustre une architecture schématisée d'un système gyroscopique selon un mode de réalisation de la présente invention.

Dans ce mode de réalisation, un tel système gyroscopique 40 comprend trois accéléromètres 401, ainsi que trois gyroscopes vibrants 402 selon un mode de réalisation de la présente invention. Dans ce système gyroscopique 40 ici schématisé, il est prévu de mesurer une accélération 403 par les accéléromètres 401 et une vitesse de rotation 404 par les gyroscopes vibrants 402. A titre d'exemple, le système considéré ici comprend trois gyroscopes vibrant mais il est aisé de déduire des sections suivantes un mode de réalisation de la présente invention selon un tel système n'en comprend qu'un seul.

Une entité de navigation NAV 405 est en charge de traiter les signaux de mesure des accéléromètres et ceux des gyroscopes vibrants pour, in fine, fournir en sortie 406 des mesures gyroscopiques telles qu'une valeur d'attitude, une valeur de position angulaire et une valeur de vitesse, sous la forme d'un signal de sortie.

Dans un mode de réalisation de la présente invention, il est prévu d'appliquer à chacun des gyroscopes vibrants un signal de commande CP (CP pour 'Commande de Précession') en plus de la vitesse de rotation que subit chaque gyroscope vibrant du système. Par conséquent, il convient de noter ici que chaque gyroscope vibrant du système fournit un signal de mesure 407 qui représente à la fois la vitesse de rotation qu'il subit au sein du système (liée au mouvement du porteur) et la commande de précession CP ou encore signal de commande appliqué selon un mode de réalisation.

Une unité d'identification d'erreurs 450 est adaptée pour identifier des erreurs du signal de mesure 407 (ou encore signal de mesure originaire). Le signal de commande et les erreurs identifiées sont soustraits du signal de mesure originaire d'un gyroscope vibrant du système au niveau d'un soustracteur 409. En sortie du soustracteur 409 est fourni un signal corrigé 408. Ce dernier est ensuite fourni à l'entité de navigation 405 qui est alors capable de fournir des mesures gyroscopiques fiables sur la base des signaux corrigés pour chaque gyroscope vibrant.

Plus précisément, les erreurs sont identifiées en fonction :
- du signal de commande qui lui a été appliqué ; et
- du signal corrigé reçu en boucle de retour 460.

Ainsi, au niveau de l'unité d'identification d'erreurs, sur la base de la précession, on est en mesure de moyenner les erreurs du signal de mesure du gyroscope vibrant. Puis, sur la base d'une comparaison du signal de mesure originaire auquel on a retranché le signal de commande et du signal corrigé (boucle de retour) pendant les périodes où le signal de commande est de haute fréquence par rapport au signal de sortie, on peut identifier les erreurs résiduelles affectant encore le signal de mesure originaire (après le moyennage des erreurs par précession alternée).

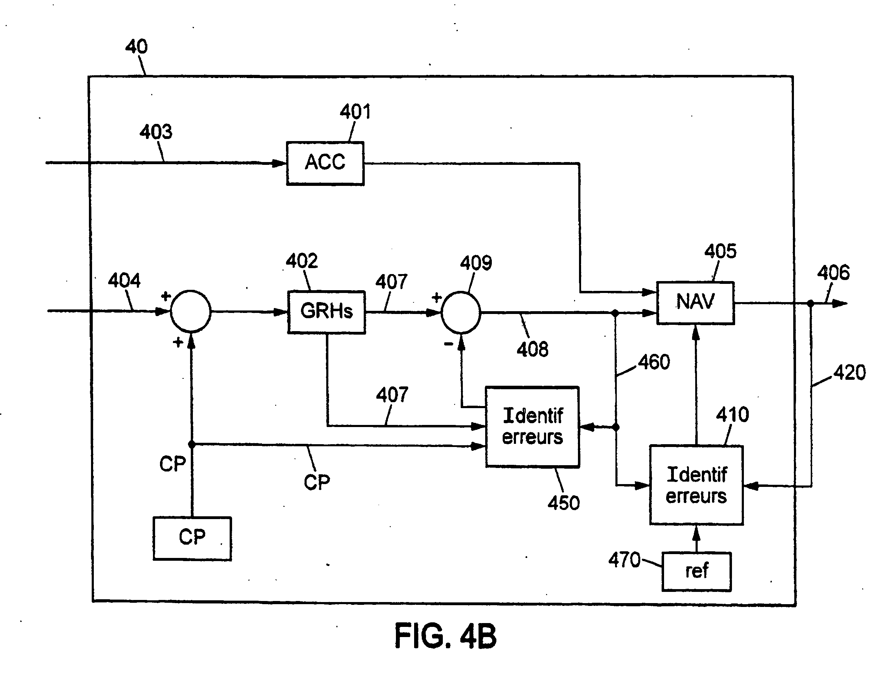

La figure 4-B illustre une autre architecture schématisée d'un système gyroscopique selon un mode de réalisation de la présente invention.

Ce système gyroscopique 40 correspond à celui illustré en figure 4-A, comprenant en outre une unité d'identification d'erreurs 410 supplémentaire. Cette unité d'identification d'erreurs supplémentaire est en charge d'identifier des erreurs sur le signal corrigé 460 en fonction d'une part du signal corrigé 460 et du signal de sortie 406 fourni in fine par le système gyroscopique et reçu au niveau de l'unité d'identification d'erreurs supplémentaire 410 via une boucle de retour 420.

Le procédé peut par exemple remplacer les données mesurées par les données extérieures si ces données sont réputées plus fiables (par exemple cas de données issues d'un autre gyroscope auquel aucune précession n'est appliquée, la différence étant alors représentative des erreurs du gyroscope faisant l'objet d'une précession via le signal de commande).

Avantageusement, une voie de retour 460 permet de fournir les mesures 406 de sortie du système gyroscopique à l'unité d'identification des erreurs 410. Ce système comprend également une entité de mesure de référence 470 adaptée pour fournir des mesures de référence du mouvement du porteur. Ces mesures de référence peuvent notamment correspondre à un mouvement nul. Tel est le cas notamment dans une phase d'alignement d'une centrale de navigation. On peut envisager que cette entité de mesure de référence corresponde à un GPS par exemple, notamment lors de la mise en oeuvre du procédé de mesure en cours de mouvement du porteur sur lequel le système gyroscopique est situé.

Cette unité d'identification d'erreurs reçoit en outre le signal partiellement corrigé 408 du gyroscope vibrant considéré. Puis, cette unité d'identification d'erreurs 410 est en charge d'effectuer la comparaison de ces signaux avec des mesures de référence fournies par une entité de mesure de référence 470 afin de réduire encore des erreurs résiduelles selon un mode de réalisation de la présente invention.

La figure 5 illustre une disposition d'un système gyroscopique selon un mode de réalisation de la présente invention. Plus précisément, les axes X, Y et Z représentent les axes du trièdre des trois gyroscopes vibrants d'un système gyroscopique selon un mode de réalisation de la présente invention. La trisectrice de ce trièdre X, Y et Z est alors avantageusement orientée à la verticale, contrairement à l'autre trièdre X', Y' et Z' également représenté sur cette figure 5.

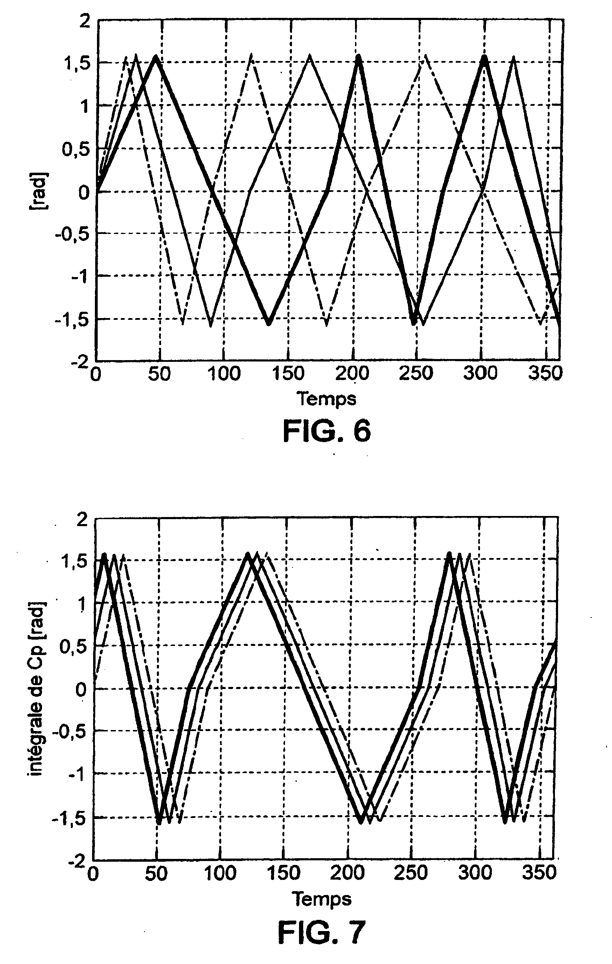

La figure 6 illustre une application de signaux de commande modulés selon un mode de réalisation de la présente invention. Une telle différence permet avantageusement de pouvoir décoreller entre elles les erreurs attachées respectivement aux signaux de mesure fournis par les gyroscopes vibrants.

La figure 7 illustre une application de signaux de commande appliqués déphasés selon un mode de réalisation de la présente invention. Dans ce mode de réalisation, les signaux de commande respectivement appliqués aux différents gyroscopes vibrants sont déphasés les uns des autres. Une telle différence permet également avantageusement de pouvoir décoreller entre elles les erreurs attachées respectivement aux signaux de mesure fournis par les gyroscopes vibrants.

Aucune limitation n'est attachée à la différence que l'on peut introduire entre les signaux de commande à appliquer aux gyroscopes vibrants pour être en mesure de séparer les erreurs attachées respectivement aux mesures fournies par les gyroscopes vibrants.

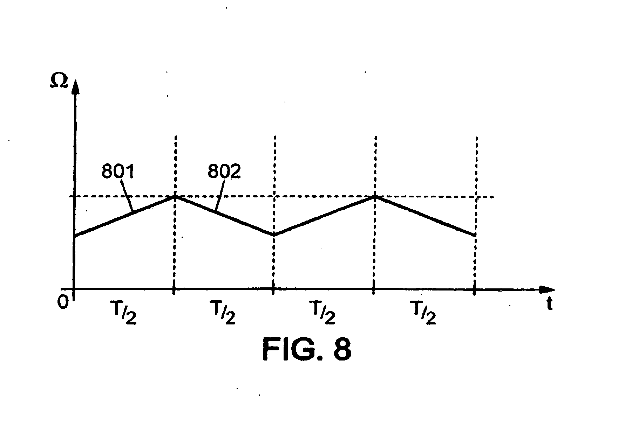

La figure 8 illustre des premier et second profils de vitesse selon un mode de réalisation de la présente invention. La figure 8 illustre le signal de commande en fonction du temps, c'est à dire la variation de la vitesse angulaire Ω en fonction du temps. Ici, la vitesse angulaire correspondant au signal de commande de changement de la position géométrique de vibration du gyroscope augmente de manière continue sur la première partie de la période du signal de commande et diminue, de la même manière qu'elle a augmentée, symétriquement, sur la seconde partie de la période du signal de commande. Ainsi, la partie 801 Illustre le premier profil de vitesse et la partie 802 illustre le second profil de vitesse, ces deux profils de vitesse étant inversés temporairement l'un par rapport à l'autre.

Par la suite, à titre illustratif uniquement, les premier et second profils de vitesse indiquent une variation de vitesse nulle en fonction du temps, c'est-à-dire une valeur de vitesse constante.

## Revendications

1. Procédé de mesures gyroscopiques sous la forme d'un signal de sortie fourni par un système gyroscopique comprenant un gyroscope vibrant ;
ledit gyroscope vibrant dans une première position géométrique de vibration initiale et fournissant un signal de mesure originaire ;
**caractérisé en ce qu'**on applique au gyroscope vibrant un signal de commande (CP) périodique sur une période de temps, adapté :
- pour faire tourner (21) la position géométrique de vibration dans un premier sens, pendant une partie de la période de temps, provocant un changement, selon un premier profil de vitesse, de la position de la vibration dudit gyroscope depuis la première position géométrique de vibration jusqu'à une seconde position géométrique de vibration ; et
- pour faire tourner (22) la position géométrique de vibration dans un second sens opposé au premier sens, pendant l'autre partie de la période de temps, provocant un changement selon un second profil de vitesse, de la position de la vibration dudit gyroscope depuis la seconde position géométrique de vibration jusqu'à une troisième position géométrique de vibration ;
les premier et second profils de vitesse générant une variation de vitesse du changement de position géométrique de vibration en fonction du temps ;
ledit signal de sortie étant basé sur un signal corrigé issu du signal de mesure originaire;
dans lequel le signal de commande a une moyenne nulle sur la période de temps ; et
dans lequel le signal corrigé est fondé sur une identification d'erreurs effectuée par comparaison entre, d'une part, le signal de commande, et, d'autre part, le signal corrigé de l'itération précédente.

2. Procédé de mesure selon la revendication 1, dans lequel le système
gyroscopique comprend en outre une entité de mesure externe, et dans lequel l'identification d'erreurs prend en compte des mesures fournies par l'entité de mesure externe.

3. Procédé de mesure selon l'une quelconque des revendications précédentes, dans lequel le signal de commande présente des portions de signal à haute fréquence relativement au signal de sortie ; et
dans lequel l'identification d'erreurs (24) est effectuée pendant les portions de signal à haute fréquence.

4. Procédé de mesure selon la revendication 3, dans lequel, le système
gyroscopique comprenant en outre une entité de mesure externe, l'identification d'erreurs prend en compte des mesures fournies par l'entité de mesure externe pendant les portions de signal du signal de commande qui ne sont pas à haute fréquence relativement au signal de sortie.

5. Procédé de mesure selon la revendication 3 ou 4, dans lequel les portions de signal à haute fréquence, dans le signal de commande, correspondent à des inversions de sens du signal de commande.

6. Procédé de mesure selon l'une des revendications 3 à 5, dans lequel le système gyroscopique comprend en outre un second gyroscope vibrant en tant qu'entité de mesure externe ; et
dans lequel un signal de commande supplémentaire est appliqué au second gyroscope vibrant, ledit signal de commande supplémentaire présentant des portions de signal à haute fréquence relativement au signal de sortie, qui sont décalées dans le temps par rapport aux portions de signal à haute fréquence du signal de commande appliqué au premier gyroscope vibrant.

7. Procédé de mesure selon la revendication 1, dans lequel le système gyroscopique comprend, outre le premier gyroscope vibrant, des deuxième et troisième gyroscopes vibrants fournissant chacun un signal de mesure originaire,
dans lequel on applique en outre à chacun des deuxième et troisième gyroscopes vibrants des signaux de commande périodiques respectifs sur une
période de temps, adaptés :
- pour faire tourner la position géométrique de vibration dans un premier sens, pendant une partie de la période de temps, provocant un changement, selon un premier profil de vitesse, de la position de la vibration depuis une première position géométrique de vibration jusqu'à une seconde position géométrique de vibration ; et
- pour faire tourner la position géométrique de vibration dans un second sens opposé au premier sens, pendant l'autre partie de la période de temps, provocant un changement selon un second profil de vitesse, de la position de la vibration depuis la seconde position géométrique de vibration jusqu'à une troisième position géométrique de vibration ;
lesdits signaux de commande ayant une moyenne nulle sur ladite période de temps et présentant des portions de signal à haute fréquence relativement au signal de sortie qui sont décalées entre elles dans le temps ;
ledit signal de sortie étant basé sur des signaux corrigés respectivement issus des signaux de mesure intermédiaires ;
dans lequel chacun des signaux corrigés est fondé sur une identification d'erreurs effectuées, pendant les portions de signal à haute fréquence du signal de commande correspondant, par comparaison entre, d'une part, le signal de mesure originaire correspondant auquel a été retranché le signal de commande correspondant et, d'autre part, le signal corrigé correspondant.

8. Procédé de mesure selon la revendication 7, dans lequel chacun desdits signaux corrigés, respectivement pour chacun des gyroscopes vibrants, est obtenu en outre par prise en compte d'erreurs identifiées (410) sur la base d'une comparaison entre, d'une part, le signal de sortie (406) fourni par le système gyroscopique en fonction de la position de vibration et, d'autre part, des mesures de référence (470).

9. Procédé de mesure selon la revendication 8, dans lequel les mesures de référence sont fournies par un signal de mesure externe.

10. Procédé de mesure selon l'une quelconque des revendications 7 à 9, dans lequel l'identification d'erreurs est déterminée, pour chacun des gyroscopes vibrants, sur la base d'un filtre de Kalman prenant en paramètre la position de vibration du gyroscope vibrant, le signal de commande (CP) et le signal de sortie (406) fourni par le système gyroscopique.

11. Procédé de mesure selon l'une quelconque des revendications 7 à 10, dans lequel les premier, deuxième et troisième gyroscopes vibrants sont positionnés selon un trièdre ayant une trisectrice orientée selon un axe sensiblement vertical.

12. Procédé de mesure selon l'une quelconque des revendications 7 à 11, dans lequel les premier et second profils de vitesse sont différents pour chacun des gyroscopes vibrants du système gyroscopique, les différences permettant que les erreurs associées aux mesures des trois gyroscopes soient décorrélées les unes des autres.

13. Procédé de mesures gyroscopiques selon l'une quelconque des revendications 7 à 12, dans lequel le second profil de vitesse correspond à l'inverse du premier profil de vitesse en fonction du temps.

14. Système gyroscopique comprenant :
- un gyroscope vibrant (402), ledit gyroscope vibrant dans une première position géométrique de vibration initiale et fournissant un signal de mesure originaire ;
**caractérisé en ce qu'**il comprend :
- une unité de commande (CP) adaptée pour appliquer un signal de commande périodique, sur une période de temps, adapté :
o pour faire tourner la position géométrique de vibration dans un premier sens, pendant une partie de la période de temps, provocant un changement, selon un premier profil de vitesse, de la position de la vibration dudit gyroscope depuis la première position géométrique de vibration jusqu'à une seconde position géométrique de vibration ; et
o pour faire tourner la position géométrique de vibration dans un second sens opposé au premier sens, pendant l'autre partie de la période de temps, provocant un changement, selon un second profil de vitesse, de la position de la vibration dudit gyroscope depuis la seconde position géométrique de vibration jusqu'à une troisième position géométrique de vibration,
- une unité de traitement (405) adaptée pour fournir un signal de sortie
sur la base d'un signal corrigé ;
les premier et second profils de vitesse générant une variation de vitesse du changement de position géométrique de vibration en fonction du temps ;
ledit signal de commande ayant une moyenne nulle sur ladite période de temps ;
des moyens de comparaison étant agencés pour comparer, d'une part, le signal de commande, et, d'autre part, le signal corrigé d'une itération précédente.

15. Système gyroscopique selon la revendication 14, comprenant en outre une entité de mesure externe, et dans lequel des mesures fournies par l'entité de mesure externe sont prises en compte pour l'identification d'erreurs.

16. Système gyroscopique selon la revendication 14 ou 15, dans lequel le signal de commande présente des portions de signal à haute fréquence relativement au signal de sortie ; et
dans lequel l'identification d'erreurs (24) est effectuée pendant les portions de signal à haute fréquence.

17. Système gyroscopique selon l'une des revendications 14 à 16, comprenant en outre un second gyroscope vibrant en tant qu'entité de mesure externe ;
dans lequel un signal de commande supplémentaire est appliqué au gyroscope supplémentaire, ledit signal de commande supplémentaire présentant des portions de signal à haute fréquence relativement au signal de sortie, qui sont décalées dans le temps par rapport aux portions de signal à haute fréquence du signal de commande appliqué au gyroscope vibrant du système.

18. Système gyroscopique selon la revendication 14, comprenant, outre le premier gyroscope vibrant, des deuxième et troisième gyroscopes vibrants fournissant chacun un signal de mesure originaire,
dans lequel on applique en outre à chacun des deuxième et troisième gyroscopes vibrants, via l'unité de commande, des signaux de commande périodiques respectifs sur une période de temps, adaptés :
- pour faire tourner la position géométrique de vibration dans un premier sens, pendant une partie de la période de temps, provocant un changement, selon un premier profil de vitesse, de la position de la vibration depuis une première position géométrique de vibration jusqu'à une seconde position géométrique de vibration ; et
- pour faire tourner la position géométrique de vibration dans un second sens opposé au premier sens, pendant l'autre partie de la période de temps, provocant un changement selon un second profil de vitesse, de la position de la vibration depuis la seconde position géométrique de vibration jusqu'à une troisième position géométrique de vibration ;
lesdits signaux de commande ayant une moyenne nulle sur ladite période de temps et présentant des portions de signal à haute fréquence relativement au signal de sortie qui sont décalées entre elles dans le temps ;
ledit signal de sortie étant basé sur des signaux corrigés respectivement issus des signaux de mesure intermédiaires ;
dans lequel chacun des signaux corrigés est fondé sur une identification d'erreurs effectuées, pendant les portions de signal à haute fréquence du
signal de commande correspondant, par comparaison entre, d'une part, le signal de mesure originaire correspondant auquel a été retranché le signal de commande correspondant et, d'autre part, le signal corrigé correspondant.

## Patentansprüche

1. Verfahren für Kreiselmessungen in Form eines Ausgangssignals, das von einem Kreiselsystem geliefert wird, welches einen Vibrationskreisel enthält;
wobei der Kreisel in einer ersten geometrischen Anfangsvibrationsposition vibriert und ein Ursprungsmesssignal liefert; **dadurch gekennzeichnet, dass** an den Vibrationskreisel über einen Zeitraum ein periodisches Steuersignal (CP) angelegt wird, das geeignet ist, um:
- während eines Teils des Zeitraums die geometrische Vibrationsposition in eine erste Richtung zu drehen (21), was eine Änderung, gemäß einem ersten Geschwindigkeitsprofil, der Position der Vibration des Kreisels von der ersten geometrischen Vibrationsposition bis zu einer zweiten geometrischen Vibrationsposition bewirkt; und
- während des anderen Teils des Zeitraums die geometrische Vibrationsposition in eine zweite Richtung entgegengesetzt zur ersten Richtung zu drehen (22), was eine Änderung, gemäß einem zweiten Geschwindigkeitsprofil, der Position der Vibration des Kreisels von der zweiten geometrischen Vibrationsposition bis zu einer dritten geometrischen Vibrationsposition bewirkt;
wobei die ersten und zweiten Geschwindigkeitsprofile eine zeitabhängige Schwankung der Geschwindigkeit der Änderung der geometrischen Vibrationsposition erzeugen;
wobei das Ausgangssignal auf einem korrigierten Signal basiert, das vom Ursprungsmesssignal stammt;
wobei das Steuersignal über den Zeitraum einen Mittelwert Null hat; und
wobei das korrigierte Signal auf einer Fehlererkennung beruht, die durch Vergleich zwischen einerseits dem Steuersignal und andererseits dem korrigierten Signal der vorhergehenden Iteration durchgeführt wird.

2. Messverfahren nach Anspruch 1, wobei das Kreiselsystem außerdem eine externe Messentität enthält, und
wobei die Fehlererkennung von der externen Messentität gelieferte Messwerte berücksichtigt.

3. Messverfahren nach einem der vorhergehenden Ansprüche, wobei das Steuersignal Hochfrequenzsignalabschnitte bezüglich des Ausgangssignals aufweist; und
wobei die Fehlererkennung (24) während der Hochfrequenzsignalabschnitte durchgeführt wird.

4. Messverfahren nach Anspruch 3, wobei, das Kreiselsystem außerdem eine externe Messentität enthält,
die Fehlererkennung Messwerte berücksichtigt, die von der externen Messentität während der Signalabschnitte des Steuersignals geliefert werden, die nicht bezüglich des Ausgangssignals hochfrequent sind.

5. Messverfahren nach Anspruch 3 oder 4, wobei die Hochfrequenzsignalabschnitte im Steuersignal Richtungsumkehren des Steuersignals entsprechen.

6. Messverfahren nach einem der Ansprüche 3 bis 5, wobei das Kreiselsystem außerdem einen zweiten Vibrationskreisel als externe Messentität enthält; und
wobei ein zusätzliches Steuersignal an den zweiten Vibrationskreisel angelegt wird, wobei das zusätzliche Steuersignal Hochfrequenzsignalabschnitte bezüglich des Ausgangssignals aufweist, die bezüglich der Hochfrequenzsignalabschnitte des an den ersten Vibrationskreisel angelegten Steuersignals zeitlich versetzt sind.

7. Messverfahren nach Anspruch 1, wobei das Kreiselsystem außer dem ersten Vibrationskreisel zweite und dritte Vibrationskreisels enthält, die je ein Ursprungsmesssignal liefern,
wobei außerdem an jeden der zweiten und dritten Vibrationskreisel über einen Zeitraum periodische Steuersignale angelegt werden, die geeignet sind,
um:
- während eines Teils des Zeitraums die geometrische Vibrationsposition in eine erste Richtung zu drehen, was eine Änderung, gemäß einem ersten Geschwindigkeitsprofil, der Position der Vibration von einer ersten geometrischen Vibrationsposition bis zu einer zweiten geometrischen Vibrationsposition bewirkt; und
- während des anderen Teils des Zeitraums die geometrische Vibrationsposition in eine zweite Richtung entgegengesetzt zur ersten Richtung zu drehen, was eine Änderung, gemäß einem zweiten Geschwindigkeitsprofil, der Position der Vibration von der zweiten geometrischen Vibrationsposition bis zu einer dritten geometrischen Vibrationsposition bewirkt;
wobei die Steuersignale über den Zeitraum einen Mittelwert Null haben und Hochfrequenzsignalabschnitte bezüglich des Ausgangssignals aufweisen, die zueinander zeitlich versetzt sind;
wobei das Ausgangssignal auf korrigierten Signalen basiert, die von den Zwischenmesssignalen stammen; wobei jedes der korrigierten Signale auf einer Fehlererkennung beruht, die während der Hochfrequenzsignalabschnitte des entsprechenden Steuersignals durch Vergleich zwischen einerseits dem entsprechenden Ursprungsmesssignal, von dem das entsprechende Steuersignal abgezogen wurde, und andererseits dem entsprechenden korrigierten Signal durchgeführt wird.

8. Messverfahren nach Anspruch 7, wobei jedes der korrigierten Signale jeweils für jeden der Vibrationskreisel außerdem durch Berücksichtigung von auf der Basis eines Vergleichs zwischen einerseits dem vom Kreiselsystem gelieferten Ausgangssignal (406) abhängig von der Vibrationsposition und andererseits Bezugsmesswerten (470) erkannten Fehlern (410) erhalten wird.

9. Messverfahren nach Anspruch 8, wobei die Bezugsmesswerte von einem externen Messsignal geliefert werden.

10. Messverfahren nach einem der Ansprüche 7 bis 9, wobei die Fehlererkennung für jeden der Vibrationskreisel auf der Basis eines Kalman-Filters bestimmt wird, das als Parameter die Vibrationsposition des Vibrationskreisels, das Steuersignal (CP) und das vom Kreiselsystem gelieferte Ausgangssignal (406) verwendet.

11. Messverfahren nach einem der Ansprüche 7 bis 10, wobei die ersten, zweiten und dritten Vibrationskreisel gemäß einem Trieder positioniert sind, das eine gemäß einer im Wesentlichen senkrechten Achse ausgerichtete Trisektrix hat.

12. Messverfahren nach einem der Ansprüche 7 bis 11, wobei die ersten und zweiten Geschwindigkeitsprofile für jeden der Vibrationskreisel des Kreiselsystems unterschiedlich sind, wobei die Unterschiede es ermöglichen, dass die den Messwerten der drei Kreisel zugeordneten Fehler voneinander dekorreliert sind.

13. Kreiselmessverfahren nach einem der Ansprüche 7 bis 12, wobei das zweite Geschwindigkeitsprofil dem Kehrwert des ersten Geschwindigkeitsprofils abhängig von der Zeit entspricht.

14. Kreiselsystem, das enthält:
- einen Vibrationskreisel (402), wobei der Vibrationskreisel in einer ersten geometrische Anfangsvibrationsposition vibriert und ein Ursprungsmesssignal liefert;
**dadurch gekennzeichnet, dass** es enthält:
- eine Steuereinheit (CP), die geeignet ist, um über einen Zeitraum ein periodisches Steuersignal anzulegen, das geeignet ist, um:
o während eines Teils des Zeitraums die geometrische Vibrationsposition in eine erste Richtung zu drehen, was eine Änderung, gemäß einem ersten Geschwindigkeitsprofil, der Position der Vibration des Kreisels von der ersten geometrischen Vibrationsposition bis zu einer zweiten geometrischen Vibrationsposition bewirkt; und
o während des anderen Teils des Zeitraums die geometrische Vibrationsposition in eine zweite Richtung entgegengesetzt zur ersten Richtung zu drehen, was eine Änderung, gemäß einem zweiten Geschwindigkeitsprofil, der Position der Vibration des Kreisels von der zweiten geometrischen Vibrationsposition bis zu einer dritten geometrischen Vibrationsposition bewirkt,
- eine Verarbeitungseinheit (405), die geeignet ist, um auf der Basis eines korrigierten Signals ein Ausgangssignal zu liefern;
wobei die ersten und zweiten Geschwindigkeitsprofile eine Schwankung der Geschwindigkeit der Änderung der geometrischen Vibrationsposition abhängig von der Zeit erzeugen; wobei das Steuersignal über den Zeitraum einen Mittelwert Null hat;
wobei Vergleichseinrichtungen angeordnet sind, um zwischen einerseits dem Steuersignal und andererseits dem korrigierten Signal einer vorhergehenden Iteration zu vergleichen.

15. Kreiselsystem nach Anspruch 14, das außerdem eine externe Messentität enthält, und
wobei von der externen Messentität gelieferte Messwerte für die Fehlererkennung berücksichtigt werden.

16. Kreiselsystem nach Anspruch 14 oder 15, wobei das Steuersignal Hochfrequenzsignalabschnitte bezüglich des Ausgangssignals aufweist; und
wobei die Fehlererkennung (24) während der Hochfrequenzsignalabschnitte durchgeführt wird.

17. Kreiselsystem nach einem der Ansprüche 14 bis 16, das außerdem einen zweiten Vibrationskreisel als externe Messentität enthält;
wobei ein zusätzliches Steuersignal an den zusätzlichen Kreisel angelegt wird, wobei das zusätzliche Steuersignal Hochfrequenzsignalabschnitte bezüglich des Ausgangssignals aufweist, die bezüglich der Hochfrequenzsignalabschnitte des an den Vibrationskreisel des Systems angelegten Steuersignals zeitlich versetzt sind.

18. Kreiselsystem nach Anspruch 14, das außer dem ersten Vibrationskreisel zweite und dritte Vibrationskreisel enthält, die je ein Ursprungsmesssignal liefern,
wobei außerdem über einen Zeitraum periodische Steuersignale an jeden der zweiten und dritten Vibrationskreisel über die Steuereinheit angelegt werden, die geeignet sind, um:
- während eines Teils des Zeitraums die geometrische Vibrationsposition in eine erste Richtung zu drehen, was eine Änderung, gemäß einem ersten Geschwindigkeitsprofil, der Position der Vibration von einer ersten geometrischen Vibrationsposition bis zu einer zweiten geometrischen Vibrationsposition bewirkt; und
- während des anderen Teils des Zeitraums die geometrische Vibrationsposition in eine zweite Richtung entgegengesetzt zur ersten Richtung zu drehen, was eine Änderung, gemäß einem zweiten Geschwindigkeitsprofil, der Position der Vibration von der zweiten geometrischen Vibrationsposition bis zu einer dritten geometrischen Vibrationsposition bewirkt;
wobei die Steuersignale über den Zeitraum einen Mittelwert Null haben und Hochfrequenzsignalabschnitte bezüglich des Ausgangssignals aufweisen, die zeitlich zueinander versetzt sind;
wobei das Ausgangssignal auf korrigierten Signalen basiert, die je von den Zwischenmesssignalen stammen;
wobei jedes der korrigierten Signale auf einer Fehlererkennung beruht, die während der Hochfrequenzsignalabschnitte des entsprechenden Steuersignals durch Vergleich zwischen einerseits dem entsprechenden Ursprungsmesssignal, von dem das entsprechende Steuersignal abgezogen wurde, und andererseits dem entsprechenden korrigierten Signal durchgeführt wird.

## Claims

1. Method of gyroscopic measurement in the form of an output signal supplied by a gyroscopic system comprising a vibrating gyroscope;
said gyroscope vibrating in a first initial geometric position of vibration and supplying an original measurement signal;
**characterised in that** a periodic control signal (CP) is applied to the vibrating gyroscope over a time period, in order to:
- rotate (21) the geometric position of vibration in a first direction, during a portion of the time period, according to a first speed profile, causing a change in the position of the vibration of said gyroscope from the first geometric position of vibration to a second geometric position of vibration; and
- rotate (22) the geometric position of vibration in a second direction opposite the first direction, during the other portion of the time period, according to a second speed profile, causing a change in the position of the vibration of said gyroscope from the second geometric position of vibration to a third geometric position of vibration;
the first and second speed profiles generating a variation in the speed of the change of geometric position of vibration over time;
said output signal being based on a corrected signal issuing from the original measurement signal;
wherein the control signal has a zero mean over the time period; and wherein the corrected signal is based on error identification conducted by comparing the control signal with the corrected signal from the previous iteration.

2. Method of measurement according to claim 1, wherein the gyroscopic
system additionally comprises an external measurement entity, and
wherein the error identification takes into account measurements supplied by the external measurement entity.

3. Method of measurement according to either of the above claims, wherein the control signal presents signal portions of high frequency relative to the output signal; and
wherein the error identification (24) is conducted during the high frequency signal portions.

4. Method of measurement according to claim 3, wherein, the gyroscopic
system additionally comprising an external measurement entity, the error identification takes into account measurements supplied by the external measurement entity during the signal portions of the control signal which are not high frequency relative to the output signal.

5. Method of measurement according to claim 3 or 4, wherein the high frequency signal portions in the control signal correspond to reversals of direction of the control signal.

6. Method of measurement according to any one of claims 3 to 5, wherein the gyroscopic system additionally comprises a second vibrating gyroscope as the external measurement entity; and
wherein an additional control signal is applied to the second vibrating gyroscope, said additional control signal presenting signal portions of high frequency relative to the output signal, which are time-shifted relative to the high frequency signal portions of the control signal that is applied to the first vibrating gyroscope.

7. Method of measurement according to claim 1, wherein the gyroscopic system comprises, in addition to the first vibrating gyroscope, second and third vibrating gyroscopes each supplying an original measurement signal,
wherein respective periodic control signals are applied over a time period to each of the second and third vibrating gyroscopes, in order to:
- rotate the geometric position of vibration in a first direction, during a portion of the time period, according to a first speed profile, causing a change in the position of vibration from the first geometric position of vibration to a second geometric position of vibration; and
- rotate the geometric position of vibration in a second direction opposite the first direction, during the other portion of the time period, according to a second speed profile, causing a change in the position of vibration from the second geometric position of vibration to a third geometric position of vibration;
said control signals having a zero mean over said time period and presenting signal portions of high frequency relative to the output signal which are time-shifted relative to each other;
said output signal being based on corrected signals respectively issuing from intermediate measurement signals;
wherein each of the corrected signals is based on error identification conducted, during the high frequency signal portions of the corresponding control signal, by comparing the corresponding original measurement signal from which the corresponding control signal has been subtracted, with the corresponding corrected signal.

8. Method of measurement according to claim 7, wherein each of said respective corrected signals for each of the vibrating gyroscopes is additionally obtained by taking into account errors identified (410) on the basis of comparing the output signal (406) supplied by the gyroscopic signal as a function of the position of vibration, with reference measurements (470).

9. Method of measurement according to claim 8, wherein the reference measurements are supplied by an external measurement signal.

10. Method of measurement according to any one of claims 7 to 9, wherein the error identification is determined, for each of the vibrating gyroscopes, on the basis of a Kalman filter given as parameters the position of vibration of the vibrating gyroscope, the control signal (CP), and the output signal (406) supplied by the gyroscopic system.

11. Method of measurement according to any one of claims 7 to 10, wherein the first, second, and third vibrating gyroscopes are positioned in a triad having a trisection oriented on a substantially vertical axis.

12. Method of measurement according to any one of claims 7 to 11, wherein the first and second speed profiles are different for each of the vibrating gyroscopes of the gyroscopic system, these differences allowing the errors associated with the measurements from the three gyroscopes to be decorrelated from each other.

13. Method of gyroscopic measurement according to any one of claims 7 to 12, wherein the second speed profile corresponds to the inverse of the first speed profile as a function of time.

14. Gyroscopic system comprising:
- a vibrating gyroscope (402), said gyroscope vibrating in a first initial geometric position of vibration and supplying an original measurement signal;
**characterised in that** it comprises :
- a control unit (CP) adapted to apply a periodic control signal over a time period, in order to:
o rotate the geometric position of vibration in a first direction, during a portion of the time period, according to a first speed profile, causing a change in the position of the vibration of said gyroscope from the first geometric position of vibration to a second geometric position of vibration; and
o rotate the geometric position of vibration in a second direction opposite the first direction, during the other portion of the time period, according to a second speed profile, causing a change in the position of vibration of said gyroscope from the second geometric position of vibration to a third geometric position of vibration,
- a processing unit (405) adapted to supply an output signal on the
basis of a corrected signal;
the first and second speed profiles generating a variation in the speed of the change in geometric position of vibration over time;
said control signal having a zero mean over said time period;
comparison means being adapted to compare the control signal and the corrected signal of a previous iteration.

15. Gyroscopic system according to claim 14, additionally comprising an external measurement entity, and
wherein the measurements supplied by the external measurement entity are taken into account for the error identification.

16. Gyroscopic system according to claim 14 or 15, wherein the control signal presents signal portions of high frequency relative to the output signal; and
wherein the error identification (24) is conducted during the high frequency signal portions.

17. Gyroscopic system according to any one of claims 14 to 16, additionally comprising a second vibrating gyroscope as the external measurement entity;
wherein an additional control signal is applied to the additional gyroscope, said additional control signal presenting signal portions of high frequency relative to the output signal, which are time-shifted relative to the high frequency signal portions of the control signal applied to the vibrating gyroscope of the system.

18. Gyroscopic system according to claim 14, comprising, in addition to the first vibrating gyroscope, second and third vibrating gyroscopes which each supply an original measurement signal,
wherein respective periodic control signals are applied over a time period to each of the second and third vibrating gyroscopes, via the control unit, in order to:
- rotate the geometric position of vibration in a first direction, during a portion of the time period, according to a first speed profile, causing a change in the position of vibration from the first geometric position of vibration to a second geometric position of vibration; and
- rotate the geometric position of vibration in a second direction opposite the first direction, during the other portion of the time period, according to a second speed profile, causing a change in the position of vibration from the second geometric position of vibration to a third geometric position of vibration;
said control signal having a zero mean over said time period and presenting signal portions of high frequency relative to the output signal which are time-shifted relative to each other;
said output signal being based on corrected signals respectively issuing from intermediate measurement signals;
wherein each of the corrected signals is based on error identification conducted, during the high frequency signal portions of the corresponding control signal, by comparing the corresponding original measurement signal from which the corresponding control signal has been subtracted, with the corresponding corrected signal.
